Europäisches Patentamt

European Patent Office

Office européen des brevets

(19)

(11) Publication number: **0 124 958**
**A1**

(12) **EUROPEAN PATENT APPLICATION**

(21) Application number: **84300929.1**

(22) Date of filing: **14.02.84**

(51) Int. Cl.³: **C 08 J 9/14**
C 08 L 25/02
//(C08L25/02, 27/12)

(30) Priority: **28.04.83 US 489616**

(43) Date of publication of application:
**14.11.84 Bulletin 84/46**

(84) Designated Contracting States:
**BE DE FR GB IT NL**

(71) Applicant: **MOBIL OIL CORPORATION**
**150 East 42nd Street**
**New York New York 10017(US)**

(72) Inventor: **Murray, James Gordon**
**9 Lycoming Lane**
**East Brunswick New Jersey 08816(US)**

(72) Inventor: **Barile, George Conrad**
**7 Warner Drive**
**South Somerville New Jersey 08876(US)**

(74) Representative: **West, Alan Harry**
**Mobil Court 3 Clements Inn**
**London WC2A 2EB(GB)**

(54) **Process for preparing a styrenic polymer foam.**

(57) Preparation of a styrenic polymer in foam form involves incorporating within the styrenic polymer a uniform dispersion of a polymeric nucleating agent which has a weight average molecular weight greater than 10,000 and is insoluble in said styrenic polymer, and foaming the styrenic polymer with a foaming agent to yield a foam having a substantially uniform cell size.

EP 0 124 958 A1

## A STYRENIC POLYMER AND A PROCESS OF PREPARING THE SAME

The present invention relates to foamable or foamed styrenic polymers and to a process for the preparation thereof.

In the prior art, foamed polymeric materials have been produced utilizing a variety of techniques. One common method comprises integrating within the polymeric material, which is in the form of beads or pellets, a blowing agent, such as pentane, for example, and subsequently utilizing such expandable beads or pellets to form the desired foamed product by extrusion, cavity molding or any other desired molding process. Another prior art extrusion system for the formation of foamed or cellular polymeric material is what is commonly referred to as a direct injection extrusion operation wherein the blowing agent is injected directly into a molten mass of foamable polymeric material and the desired foam material is extruded, as a sheet or tube, for example, in a single continuous operation. Both prior art systems are largely dependent for successful operation upon the selection of a proper cell size control additive to ensure proper cell size of the final products.

It has now been found that styrenic polymers in foam or foamable form can be produced so that the foam will have a uniform cell size by the incorporation in the styrenic polymer of a finely divided high molecular weight polymer nucleating agent which is insoluble in the styrenic polymer.

According, the invention resides in one aspect in a process of preparing a styrenic polymer in foam form comprising, incorporating within the styrenic polymer a uniform dispersion of a polymeric nucleating agent which has a weight average molecular weight greater than 10,000 and is insoluble in said styrenic polymer and foaming the styrenic polymer with a foaming agent to yield a foam having a substantially uniform cell size.

In a further aspect, the invention resides in a styrenic polymer containing a uniform dispersion of a finely divided polymeric nucleating agent having a weight average molecular weight greater than 10,000, insoluble in said styrenic polymer at least at the .temperature
employed during creation of a foam cell network in said styrenic
polymer by means of a foaming agent.

The high molecular weight polymer used as the nucleating
agent herein must be insoluble in the styrenic polymer at least at the
temperature of the styrenic polymer at the time of creation of the
foam network. By high molecular weight is meant a weight average
molecular weight of greater than about 10,000. The nucleating agent
can be incorporated within the styrenic polymer during formation of
the styrenic polymer, i.e. incorporated therein in-situ.
Alternatively, the nucleating agent can be incorporated into the
foamable styrenic polymer after the formation of the styrenic
polymer. Thus, a foamable preformed styrenic polymer containing the
nucleating agent can result either from an in-situ incorporation or
from incorporation after the polymer has been formed. In addition,
the nucleating agent can be incorporated within the foamable styrenic
polymer as an integral process step in the creation of the styrenic
foam structure. By this is meant, that sometime during the melt stage
of the styrene polymer foam process, the nucleating agent can be
dispersed therein.

It is believed that any finely divided high molecular weight
polymer which is insoluble in the styrenic polymer, at least at the
time of the formation of a foam network by means of a foaming agent,
can be employed. These polymeric nucleating agents include the
nylons, polycarbonates and polyimides but generally that class of
polymers known as fluoroplastics is preferred. By fluoroplastics is
meant any plastic based on polymers made from monomers containing one
or more atoms of fluorine or copolymers of such monomers with other
monomers, the fluorine-containing monomer being in the greatest amount
by weight (ASTM D-883). The fluoroplastics contemplated include
polytetrafluoroethylene, fluorinated ethylene-propylene copolymers
perfluoroalkoxy resins, ethylene-tetrafluoroethylene copolymers and
polyvinylidene fluoride. Particularly preferred among the
fluoroplastics is polytetrafluoroethylene in powder form. These
materials all should have a weight average molecular weight of greater than 10,000. An especially preferred polymer is a commercially available Teflon powder identified as DuPont DLX 6000 and having a mean particle size of about 0.6 microns.

The foamable polymers used herein are styrenic polymers and preferably are polymers of styrene, p-methylstyrene, alpha-methylstyrene, and any monomer mixtures thereof. Polystyrene and poly(p-methylstyrene) are especially preferred. The polymeric nucleating agent must be present in an amount and in a particle size sufficient to yield an at least substantially uniform fine cell foam in the ultimately foamed styrenic polymer. The amount of nucleating agent generally will range from 0.001 to 0.5% by weight of the styrenic polymer prior to the foaming thereof. An effective mean particle size for the nucleating agent is from 0.1 to 10 microns. Particularly preferred is a mean particle size of about 0.6 microns.

After the subject nucleating agent is effectively incorporated within the selected sytrenic polymer, the styrenic polymer can be converted into foam form by any conventional process. Two such foaming processes are disclosed in U.S. Patent Nos. 3,482,006 and 3,444,283. If the nucleating agent is incorporated into the styrenic polymer in-situ any of the techniques for the polymerization of the monomeric material can be employed, such as anionic polymerization, bulk polymerization, emulsion polymerization, solution polymerization and suspension polymerization.

Example I

A mixture of styrene (200 ml), pentane foaming agent (1,000 ml), styrene-butadiene AB block copolymer (0.2 gm-containing 40% styrene and having a molecular weight of 225,000) and Teflon powder (0.2 gm DuPont DLX 7000) was polymerized with 1.5N butyl lithium (1.2 ml) by stirring overnight at room temperature. The product was isolated by filtration and consisted of spherical particles 0.05-0.2 mm in diameter.

This product was expanded by foaming the same in boiling water. The resulting product was a uniform small cell foam product having a bulk density of approximately 3 lbs./ft$^3$. (48 kg/m$^3$)

## Example II

The process was repeated but with the exclusion of the Teflon powder. The resulting polymer beads were expanded as in Example I. A non-uniform cell structure was present in the foam product.

## Example III

Bulk polymerization of styrene was carried out by heating styrene (180 ml), ethylbenzene (20 ml) and Teflon (0.03 gm DuPont DLX 7000) at 130°C for 6 hours and the resultant mixture devolatilized.

The resulting polymer foamed to a fine cell foam structure after saturating with pentane, without the addition of a separate nucleating agent.

## Example IV

Example III was repeated using p-methylstyrene monomer instead of styrene. The resulting polymer foamed to a fine cell foam structure without the addition of a separate nucleating agent.

## Example V

As an example of the general process disclosed in U.S. Patent No. 3,482,006 and the incorporation of the fluoroplastic nucleating agent into the melt, polystyrene foam can be prepared as follows: Polystyrene resin pellets are admixed with polytetrafluoethylene powder having a mean particle size of about 0.6 microns such that the nucleating agent constitutes 0.02% by weight based upon the total weight of the polystyrene being charged. These materials are continuously fed into a hopper of, for example, a 2 1/2 inch (6.4 cm) diameter screw extruder having a length to diameter ratio of 24:1. The extruder is operated at an extrusion rate of about 150 lbs. (68 kg) per hour. By means of extruder barrel heaters, the portion of the extruder barrel surrounding the feedzone of the extruder is maintained at a temperature of about 220°F. (104°C). In the heat plasticizing zone, the pentane injection zone, and the mixing zone, the extruder barrel is maintained at a temperature of about 400° to 450°F. (204 to

232°C).  About 5% by weight of pentane, based upon the total weight of
resin and nucleating agent, is injected into the·polystyrene
composition at a point beyond the feed zone where the polystyrene is
in a molten condition.  The molten mass is then passed through the
extruder mixing zone and a cooling zone where it is cooled to
290°-320°F. (143 - 160°C), and then extruded through an annular die
orifice as a tubular foamed sheet.  The tubular foam is passed about
and over a mandrel designed to assist in maintaining a substantially
uniform diameter within the extruded foam polymer tube.  Thereafter, a
knife or other cutting means cuts through one wall of the extruded
tube and the same is opened to form a single wide sheet of extruded
foam which can thereafter be wound into a roll for subsequent storage
or use during thermoformation.  The foregoing technique employing the
polytetrafluoroethylene nucleating agent yields a fine uniform cell
foam structure.

CLAIMS

1.    A process of preparing a styrenic polymer in foam form comprising, incorporating within the styrenic polymer a uniform dispersion of a polymeric nucleating agent which has a weight average molecular weight greater than 10,000 and is insoluble in said styrenic polymer, and foaming the styrenic polymer with a foaming agent to yield a foam having a substantially uniform cell size.

2.    The process of claim 1 wherein said polymeric nucleating agent is incorporated in said styrenic polymer in-situ during the styrenic polymerization.

3.    The process of claim 1 wherein said polymeric nucleating agent is incorporated into said styrenic polymer after the latter is polymerized.

4.    The process of claim 1 or claim 2 wherein said polymeric nucleating agent is a homopolymer of a monomer containing one or more fluorine atoms or a copolymer of such a monomer with at least one other monomer, the fluorine-containing monomer being in the greatest amount by weight.

5.    The process of claim 4 wherein the nucleating agent is polytetrafluoroethylene.

6.    The process of any preceding claim wherein said styrenic polymer is selected from a polymer of styrene, p-methylstyrene, alpha-methylstyrene or any monomer mixture thereof.

7.    The process of any preceding claim wherein nucleating agent is present, prior to foaming, in an amount between 0.001 and 0.5% by weight of the styrenic polymer.

8.    The process of any preceding claim wherein said nucleating agent has a mean particle size from 0.1 to 10 microns.

9.    A styrenic polymer containing a uniform dispersion of a finely divided polymeric nucleating agent having a weight average molecular weight greater than 10,000, insoluble in said styrenic polymer at least at the temperature employed during creation of a foam cell network in said styrenic polymer by means of a foaming agent.

10.    The styrenic polymer of claim 9 wherein said nucleating agent has a particle size of 0.1 to 10 microns and is present in an amount of from 0.001 to 0.5% by weight of the styrenic polymer.

2424H

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-1 143 558 (SHELL INTERNATIONALE RESEARCH MAATSCHAPPIJ) * Claims 1-3,6-13; page 1, line 53 - page 2, line 21; page 2, lines 59-73; page 3, lines 13-25; page 3, lines 34-57; example II * | 1,3-10 | C 08 J 9/14 C 08 L 25/02 // (C 08 L 25/02 C 08 L 27/12 ) |
| Y | | 2 | |
| Y | GB-A-1 497 319 (SOCIETA ITALIANA RESINE) * Claims 1,2,6,7 * | 1,2 | |
| A | GB-A- 997 356 (SHELL INTERNATIONALE RESEARCH MAATSCHAPPIJ) * Claims 1-7,11,12,15; page 2, line 97 - page 3, line 1 * | 1,2 | **TECHNICAL FIELDS SEARCHED (Int. Cl. ³)** C 08 J |

The present search report has been drawn up for all claims

| Place of search THE HAGUE | Date of completion of the search 30-07-1984 | Examiner HALLEMEESCH A.D. |
|---|---|---|